(19) Europäisches Patentamt
European Patent Office
Office européen des brevets

(11) Publication number: **0 306 006**
**A2**

(12) # EUROPEAN PATENT APPLICATION

(21) Application number: **88114218.6**

(22) Date of filing: **31.08.88**

(51) Int. Cl.4: **C08K 5/00 , C08L 27/06 , C08J 7/02**

(30) Priority: **04.09.87 US 93336**

(43) Date of publication of application: **08.03.89 Bulletin 89/10**

(84) Designated Contracting States: **AT BE CH DE ES FR GB IT LI NL SE**

(71) Applicant: **M & T CHEMICALS, INC.**
**One Woodbridge Center**
**Woodbridge, New Jersey 07095(US)**

(72) Inventor: **Silbermann, Joseph**
**8 Pendelton Place**
**Old Bridge, N.J. 08851(US)**
Inventor: **Burchill, Michael**
**145 Princeton Arms South**
**Cranbury, N.J. 08412(US)**

(74) Representative: **Lederer, Franz, Dr. et al**
**Patentanwält Dr. Franz Lederer Lucile Grahnstrasse 22**
**D-8000 München 80(DE)**

(54) **U.V. stabilizer composition for surface modifying a pvc resinous sheet.**

(57) What is described herein is a liquid U.V. stabilizer composition and process for effectively surface modifying a PVC resinous body to provide a stabilizing amount of U.V. stabilizer within the surface region of the body within a predetermined solution contact time without leaving an appreciable amount of solvent therein or stabilizer on the surface of the body, and without affecting the surface appearance of the modified surface of the body.

In one form of the invention, the U.V. stabilizer composition comprises about 10 to 50 wt/vol%, preferably 15 to 35 wt/vol%, of a U.V. stabilizer dissolved in a mixture of methylene chloride and a liquid fluorochloro hydrocarbon. Suitably the methylene chloride component of the solvent mixture comprises about 40 to 99%, preferably about 50 to 85%, and the fluorochloro hydrocarbon component comprises about 1 to 60%, preferably about 15 to 50%, of the solvent mixture. A preferred fluorochloro hydrocarbon is 1,1,2-trifluoro-1,2,2-trichloroethylene.

EP 0 306 006 A2

# U.V. STABILIZER COMPOSITION FOR SURFACE MODIFYING A PVC RESINOUS SHEET

## 1. Field of the Invention

This invention relates to a PVC resinous article having its surface modified with a U.V. stabilizer, and, more particularly, to a U.V. stabilizer composition which is particularly effective for surface modification of PVC resinous articles.

## 2. Description of the Prior Art

Photodegradation of many types of solid polymeric articles by U.V. light has been a continual problem confronting the industry. Such U.V. degradation causes discoloration, embrittlement and deterioration of the article. Accordingly, U.V. absorber compounds have been incorporated into such polymeric articles in an attempt to provide effective stabilization to U.V. light.

However, photodegradation is known to be a surface phenomenon. Accordingly, incorporation of U.V. stabilizers into the polymeric material prior to shaping the resin into solid form has been largely uneconomical and inefficient because the stabilizer is present substantially in the interior of the shaped article, where it cannot function effectively to prevent surface photodegradation.

Accordingly, surface treatments have been proposed to provide more effective U.V. protection for resins such as PVC. These surface treatments are based on the ability of various organic solvents to swell the resin and to direct the ultraviolet light stabilizer material dissolved in the solvent principally into the surface region of the resin body.

Another surface method comprises laminating the surface of the polymer with a layer of film-forming material containing the U.V. stabilizer. However, the lamination approach, unfortunately, suffers from the problems of incompatibilities between polymer, U.V. stabilizer, the film-forming material and its carrier components. Furthermore, the laminated layer and the surface of the polymer often do not adhere well, whereupon delamination can occur upon shock or impact.

The swelling method is described in detail, for example, by Katz, et al. in articles appearing in the "Proceedings of the A.C.S. Div. or Org. Coatings and Plastics" 36, (1) p. 202-205 (1976), entitled "Ultraviolet Protection of Transparent PVC by Diffusion Coating" and in Soc. Plast. Eng., Tech. Papers (1976), 22, 511-512. Katz uses a dip method to impregnate a transparent PVC sheet with a non-migrating ultraviolet light absorber. The dip technique comprises swelling the polymer with a carrier solvent, infusing the stabilizer from a dilute solution, e.g. 3-6.5%, of stabilizer in the carrier, and thereafter heating the treated polymer in air at an elevated temperature to drive the stabilizer below the surface of the polymer and to remove residual solvent. The solvents disclosed were toluene, tetrachloroethane, chloroform and 1,2-dichloroethane, and mixtures of chloroform and 1,2-dichloroethane.

Jochanan, in Israel Patent No. 39,037, published Nov. 10, 1975, entitled "U.V.-and Oxidation-Proof Products from Organic Plastics and their Manufacture", describes various methods of applying a 50% solution or suspension of an ultraviolet light absorber in methylene chloride to the surface of a plastic sheet. The methods disclosed by Jochanan included immersion, spraying, brushing, roller-printing and curtain-coating. However, with such application methods, a large amount of residual stabilizer and solvent is left on the surface of the article, whereupon the modified surface is observed to be streaky, hazy, and has runs or pockmarks thereon. In fact, at a stabilizer concentration of 12.5%, the resultant surface was found to become white and opaque.

Amborski, in U.S. 3,043,709, discloses an organic polymeric article having an ultraviolet light absorber compound adjacent to the surface of the article. The article is treated by several methods, including dipping-coating a PVC film in a 2 1/2% stabilizer solution in ethanol, and, thereafter, heating the coated film in air at 130° C. to drive the absorber below the surface of the film and to remove the solvent.

Solvay and Cie, in Belgian Patent No. 612,206, discloses a process for surface treating rigid polyvinyl chloride objects. The method comprises immersing the object in a swelling solvent containing a very small amount of light stabilizer, e.g. 0.5% and then evaporating the solvent in air. The solvents disclosed are THF, cyclohexanone, DMF, acetone and carbon disulfide.

Bristol, in U.S. 3,519,462, describes the treatment of polyvinyl chloride and other polymers with a solution of a U.V. stabilizer in a diol or triol, e.g. propylene glycol. These solvents, however, are not efficient swelling agents for PVC.

Lempkowicz, in U.S. Patent 4,126,600, describes a solution process for surface modifying PVC by applying a stabilizer solution in air to a heated PVC sheet and then vaporizing the solvent remaining in the sheet. The amount of U.V. agent present in the treatment solution is disclosed to vary between 5 and 40% by weight of the solution, preferably between 10 and 30%. Suitable solvents are disclosed as being chlorinated solvents derived from hydrocarbons containing from 1 to 3 carbon atoms, such as methylene chloride and dichloroethanes. The best results were obtained, according to the description and examples, by use of a mixture of 1,1,2-trichloroethane and tetrachloroethylene in a weight ration of between 1.5 and 3 thereof.

Baumgartel, H. et al, in FRG Patent Applications 28 08 005 and 28 08 036, both filed 2/24/78, laid-open 8/30/79, describes a process for rejuvenating installed, weathered PVC siding by spraying, brushing or roller-coating the siding with a solution of a U.V. absorber in an organic solvent or mixture of solvents. The concentration of U.V. stabilizer in such solution is between 0.1 to 5 wt.%., preferably 0.5 to 2.5%. The preferred solvent system is a mixture of liquids, particularly methylene chloride and a second liquid, such as acetone, ethyl acetate, methyl acetate, THF, cyclohexanone, DMF and methyl alcohol.

However, the processes and solutions used theretofore have not provided a PVC article which is surface modified effectively with a stabilizing amount of U.V. stabilizer, within a predetermined application time, while minimizing the amount of solvent which enters the resin body. In particular, treating PVC with solutions of U.V. stabilizers by the methods of the prior art, i.e. by dipping, spraying, etc., followed by air drying at elevated temperatures or washing with a solvent which dissolves the stabilizer solution, often results in a surface which is tacky and covered with solid streaks of stabilizer which can be easily scraped off. The modified surface can be glossy, and, in general, of poor appearance. Increasing the concentration of stabilizer in the solution only aggravates the situation.

Accordingly, it is an object of the present invention to provide a composition comprising a U.V. stabilizer in a resin swellable, non-flammable, liquid, solvent mixture, having a predetermined concentration of stabilizer therein which is particularly effective for surface modifying a PVC resin body within a stabilizing amount of U.V. stabilizer in the surface region thereof, with a selected application time, while minimizing the amount of residual solvent which enters the resin body, and without affecting the appearance of the modified surface.

Another object of the invention is to provide a process for surface modifying a PVC resinous body with said composition.

These and other objects and features of the invention will be made apparent from the following more detailed description of the invention.

## SUMMARY OF THE INVENTION

What is described herein is a liquid U.V. stabilizer composition and process for effectively surface modifying a PVC resinous body to provide a stabilizing amount of U.V. stabilizer within the surface region of the body within a predetermined solution contact time without leaving an appreciable amount of solvent therein or stabilizer on the surface of the body, and without affecting the surface appearance of the modified surface of the body.

As a feature of the invention, the U.V. stabilizer composition includes a resin swellable, non-flammable, liquid solvent mixture in which surface modification of PVC can occur to provide a U.V. stabilized article having excellent outdoor weathering properties.

In one form of the invention, the U.V. stabilizer composition comprises about 10 to 50 wt/vol%, preferably 15 to 35 wt/vol%, of a U.V. stabilizer dissolved in a mixture of methylene chloride and a liquid fluorochloro hydrocarbon. Suitably the methylene chloride component of the solvent mixture comprises about 40 to 99%, preferably about 50 to 85%, and the fluorochloro hydrocarbon component comprises about 1 to 60%, preferably about 15 to 50%, of the solvent mixture. A preferred fluorochloro hydrocarbon is 1,1,2-trifluoro-1,2,2-trichloroethylene.

The process of the invention includes the steps of:

(a) applying the stabilizer composition to the surface of the PVC resin body for a selected contact time, and

(b) displacing residual stabilizer solution present in the thus-treated surface by a liquid which is non-miscible with the solvent mixture.

Preferably, both process steps are carried out in an atmosphere which is non-evaporative of the solvent, and, displacing occurs by directing the liquid forcefully against the treated surface, e.g. by agitation or a jet stream. A preferred liquid is water.

## DETAILED DESCRIPTION OF THE INVENTION

The U.V. stabilized article is made by a continuous process in which the resin body in contacted with a solution of U.V. stabilizer in a resin-swellable organic solvent, which is non-flammable, and thereafter residual stabilizer and solvent are displaced from the modified surface, both steps being carried out under conditions which are non-evaporative of the solvent.

In a preferred embodiment of this process, the resin body is immersed in a suitable liquid media, such as water, and the surface to be modified is contacted through the liquid media with a solution of an ultraviolet light absorber in a resin-swellable organic solvent, which is non-flammable and, thereafter, a jet of water is directed against the modified surface to displace residual stabilizer and solvent from the modified surface in situ.

The preferred arrangement in this process is a two-layer system, where water is the upper layer, and the stabilizer composition is the lower layer. The PVC resin sheet thereby is immersed in the upper layer and the stabilizer composition is pumped from the lower layer and directed onto the sheet surface to be modified. Excess stabilizer solution then falls off the surface of the body by gravity and returns to the lower layer. During the time of application of the stabilizer composition, the solvent mixture in the composition is prevented from evaporating into the atmosphere by the blanket of liquid above it, which is advantageous for producing a modified surface having a high degree of surface perfection, and for ecological reasons.

In operation, a continuous resin strip of extruded polyvinyl chloride is fed into the upper layer at a predetermined rate from below a roller which is positioned below the surface of the water. In the "application zone" a series of applicator nozzles are oriented below the surface level of the water with their orifices directed towards the surface strip. The applicator nozzles continuously direct a stream of stabilizer composition over the upper surface of the moving resin strip. The thus-applied stabilizer solution remains on the surface of the strip whereupon the surface region is modified effectively with stabilizer. The length of time the stabilizer solution remains on the surface of the sheet within the application zone is referred to herein as the "contact time" of the process.

Downstream of the applicator zone is a "displacement zone", in which residual stabilizer solution is removed in situ from the thus-treated surface of the strip. The term "in situ" means that the displacement step is carried out without exposing the treated surface to the ambient atmosphere; rather, the surface remains under water where the solvent cannot evaporate.

The duration of passage from the applicator zone to the displacement zone is defined herein as the "contact time" of the process.

In the displacement zone, as jet element directs a spray of displacing liquid, preferably water, at a pressure sufficient to displace residual stabilizer solution from the treated surface of the strip.

A second roller is located ahead of the displacement zone and below the level of the water to accept the thus-treated resin strip after it leaves the displacement zone. Variable speed nip roller pullers are positioned outside the tank to move the strip at a predetermined speed through and out of the tank, where it can be stored on a suitable take-up roll.

In this two-layer process, the steps of application of stabilizer composition and displacement of residual stabilizer solution on the treated surface are carried out without subjecting the applying or residual solution to the atmosphere, i.e. under non-evaporative conditions. Therefore such process allows the use of high concentrations of stabilizer in solvent. For example, treating PVC sheets with a 30% by weight stabilizer in solvent provides a surface modified PVC sheet whose surface appearance is indistinguishable from an untreated surface. In contrast, merely dipping a PVC sheet in the same stabilizer solution, and air drying, or washing with miscible organic solvents, results in a treated surface which is tacky, glossy, and covered with solid stabilizer material, which can be scraped off easily.

Surface treatment with the stabilizer composition herein results in diffusion of both stabilizer material and solvent in the same ratio as present in the stabilizer solution, although the absolute amounts of each are a function of contact time. Therefore, at a given contact time, the use of a composition having a high concentration of stabilizer therein will result in a low amount of solvent in the treated product. Furthermore,

a predetermined level of stabilizer in the product can be obtained within a reduced contact time by use of the concentrated stabilizer composition of the invention.

Of course, the use of a high concentration of stabilizer in the solvent mixture requires a solvent which must satisfy a number or parameters simultaneously, namely, (1) it must dissolve the stabilizer effectively at such high concentrations; (2) it must not degrade the PVC resin; (3) it must be non-miscible with water; and (4) it must be capable of swelling the PVC effectively within a predetermined contact time to allow diffusion of stabilizer material into the surface region of the PVC body.

The use of high concentrations of stabilizer in one suitable organic solvent only, e.g. methylene chloride, results in an uneconomically high amount of stabilizer being incorporated into the PVC body, unless the contact time is reduced to levels in appropriate to reasonable feed speeds for PVC sheets in a continuous two-layer process.

Accordingly, in this invention a cosolvent for methylene chloride is provided, the swelling rate of such cosolvent being lower than that of methylene chloride, but which otherwise does not substantially affect the desirable attributes of methylene chloride as a solvent for the U.V. stabilizer material. Specifically, such cosolvent is non-degradive towards PVC, is non-flammable, and contributes towards enhanced weatherability of the surface modified article.

The cosolvent (or cosolvents) for use herein are liquid fluorochloro hydrocarbons. A preferred cosolvent is 1,1,2-trifluoro-1,2,2-trichloroethane. This cosolvent provides articles having enhanced weathering as compared to over surfaces modified with methylene chloride alone, at the same amount of stabilizer therein.

Suitably, the methylene component of the solvent mixture comprises about 40 to 99%, preferably about 50 to 85%, and the 1,1,2-trifluoro-1,2,2-trichloroethane component comprises about 1 to 60%, preferably about 15 to 50%, of the solvent mixture.

The amounts of stabilizer incorporated into the surface region of the PVC article suitably is at least 0.3 $g/m^2$, preferably 0.5 to 10.7 $g/m^2$, the surface region extending from the surface down to a depth of up to 200 microns; and at least 70% of this stabilizing amount is present within the first 100 microns of the surface region.

The residual level of solvent remaining in the treated PVC article after surface modification with the composition of the invention suitably is less than 1%.

The contact time in the process generally is about 2 seconds to 2 minutes, preferably about 5 seconds to 40 seconds, which time will depend upon the line speeds, which usually are about 1-60 ft/min., and about 60 ft/min. for sheets of PVC siding. Such contact times permit a reasonable separation of application and displacement zones, and allow for swelling and diffusion of a predetermined amount of stabilizer into the treated surface.

The concentration of stabilizer in the solvent mixture of the invention suitably ranges from about 10 to 50 wt./vol.%, preferably 15 to 35.

The contact time selected for the stabilizer composition of the invention also will affect the diffusion profile of stabilizer within the surface region of the article. Shorter contact times favor more stabilizer within the portions of the surface region nearer the surface itself, e.g. about 50 microns, while longer contact times result in a greater depth of penetration into the surface region, e.g. 100 microns. Accordingly, at a given concentration of stabilizer, and selected line speed, the amount of stabilizer incorporated into the surface region and its gradient or diffusion profile, can be selected by the ratio of the rapid swelling solvent, e.g. methylene chloride solvent, to its slower swelling cosolvent, e.g. a liquid fluorinated chlorinated hydrocarbon.

The invention will be illustrated by reference to the following examples.

## Example 1

A composition of 30.0% by weight of Cyasorb U.V. 5411 stabilizer (a trademark of American Cyanamid Co.) in a solvent mixture of 50-50 vol/vol methylene chloride and 1,1,2-trifluoro-1,2,2-trichloroethane was applied onto the upper surface of a horizontally supported, moving polyvinyl chloride resin strip of 1300 microns thickness, having 0% $TiO_2$, which was immersed in water at 25° C. The feed rate of the strip was 1.5 ft./min. The applicator nozzles were directed vertically towards the upper surface of the sheet from a position beneath the water level. Thereupon stabilizer was absorbed into the surface region of the upper surface of the sheet and excess solution fell to the bottom of the tank. Downstream of the applicator zone, a jet of water was applied to the treated surface to displace residual stabilizer and solvent still remaining on the treated surface. The U.V. stabilized article then exited the tank and was wound onto a take-up roll.

## Example 2

The U.V. stabilized article prepared in Example 1 was microtomed into 20 micron sections extending to a total depth of 200 microns from the surface. The amount of U.V. stabilizer present in each of these sections was determined by means of high pressure liquid chromatography (HPLC) analysis. The results show that more than 70% of the U.V. stabilizer was present within the first 100 microns from the surface of the sheet. Within the interior or bulk of the sheet, i.e. from 200 to 1300 microns, substantially no stabilizer is present. Furthermore, residual stabilizer and solvent (less than 1% of each) are not present on the modified surface of the sheet. The treated surface was uniform, non-tacky, had no streaks of solid material thereon, and retained its original planarity and hardness.

## Example 3

Following the procedures of Examples 1 and 2, various stabilizer solutions were applied onto the upper surface of the PVC sheet during predetermined contact times. Table I shows the amount of the stabilizer incorporated into the surface region of the resin sheet for such various stabilizer solutions and contact times.

The protection of the article against deterioration by U.V. light under these different process conditions is presented as changes in yellowness index (YI), or ΔYI values. The ΔYI values were determined upon accelerated U.V. exposure tests, according to ASTM G 53-84. The change from initial to final YI is designated ΔYI. A YI value of zero (or minus) indicates minimal or complete absence of yellow; positive ΔYI values evidences increasing yellowness caused by U.V. exposure.

Table I

Effect of (a) Concentration of Stabilizer (b) Solvent Composition and (c) Contact Time on Amount of Stabilizer Incorporated into Surface Region of Sheet and the U.V. Stability of Treated Article

| | Solvent Composition | | Contact Time | Stabilizer Conc. | Amount of Stabilizer | ΔYI U.V. Exp. |
|---|---|---|---|---|---|---|
| Sample No. | A* | B* | (Sec) | (wt/vol) | ($g/m^2$) | (QUV-10wks) |
| **Stabilizer Compositions of Invention** | | | | | | |
| 1 | 80 | 20 | 5.3 | 10 | 1.3 | 4.30 |
| 2 | 80 | 20 | 21 | 10 | 1.6 | 3.89 |
| 3 | 80 | 20 | 43 | 10 | 2.7 | 4.54 |
| 4 | 80 | 20 | 30 | 10 | 1.9 | 6.77 |
| 5 | 60 | 40 | 15 | 30 | 2.4 | 5.50 |
| 6 | 60 | 40 | 10 | 10 | 1.0 | 3.56 |
| 7 | 60 | 40 | 5 | 10 | 0.6 | 4.40 |
| 8 | 60 | 40 | 40 | 10 | 1.4 | 4.98 |
| 9 | 60 | 40 | 5 | 30 | 1.0 | 3.81 |
| **Comparative Tests** | | | | | | |
| 10 | 100 | 0 | 10 | 10 | 2.2 | 6.38 |
| 11 | 100 | 0 | 5 | 10 | 2.0 | 6.14 |
| 12 | 100 | 0 | 50 | 10 | 4.7 | 5.78 |
| 13 | 100 | 0 | 10 | 30 | 4.7 | 7.40 |
| 14 | 100 | 0 | 5.5 | 30 | 3.8 | 7.44 |

A* - methylene chloride

B* - 1,1,2-trifluoro-1,2,2-trichloroethylene

UV Stabilizer Solution

Stabilizer

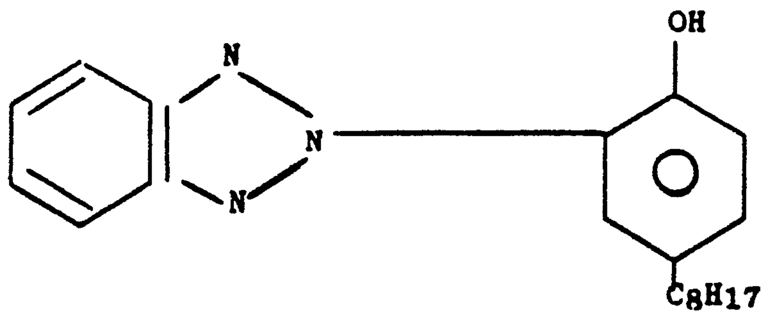

M.W. = 323.4

**Cyasorb UV 5411 (Trademark of the American Cyanamid Co.)**
**Chemical Name: 2(2′ -hydroxy-5′t-octylphenyl)-benzotriazole**

The results in Table I show that application of stabilizer compositions of the invention provides an amount of stabilizer in the surface region (greater than 70% within 100 microns of the sheet) sufficient to afford excellent protection against U.V. light. These results are obtained in a desired contact time, and at a stabilizer concentration which leaves less than 1% solvent in the treated article. Furthermore, the solvent mixture of the invention provides enhanced weatherability in the treated article as compared to methylene chloride alone at the same stabilizer level.

## Claims

1. A U.V. stabilizer composition which is particularly effective for surface modification of a PVC resinous body with a stabilizing amount of a U.V. stabilizer within the surface region of the body within a predetermined contact time without leaving an appreciable amount of solvent therein or excess stabilizer on the surface thereof consisting essentially of:

(a) about 10 to 50% wt./vol., preferably 15 to 35% wt./vol., of a U.V. stabilizer dissolved in

(b) a PVC resin-swellable organic solvent mixture which comprises

(1) methylene chloride and

(2) a liquid fluorochloro hydrocarbon

2. A U.V. stabilizer composition according to claim 1 wherein (b) (1) and (b) (2) are present in said solvent mixture in amounts of about 40 to 99%, preferably about 50 to 85%, especially 60%, and about 1 to 60%, preferably about 15 to 50%, especially 40%, by volume, respectively.

3. A U.V. stabilizer composition according to claim 5 wherein (a) is present in an amount of about 30% wt./vol.

4. A U.V. stabilizer composition according to claim 1 wherein (b) (2) is 1,1,2-trifluoro-1,2,2-trichloroethylene.

5. A process for surface modification of a PVC resinous body with a stabilizing amount of a U.V. stabilizer within the surface region of the body within a predetermined contact time without leaving an appreciable amount of solvent therein or excess stabilizer on the surface thereof which comprises:

(1) contacting said PVC body with a U.V. stabilizer solution consiting essentially of:

(a) about 10 to 50% wt./vol, preferably 15 to 35% wt./vol., especially 20 to 40% wt./vol. of a U.V. stabilizer dissolved in

(b) a PVC resin-swellable organic solvent mixture which comprises:

(1) methylene chloride and a liquid fluorochloro hydrocarbon, and

(2) displacing residual stabilizer solution on the surface of the treated body.

6. A process according to claim 5 wherein (b) (1) and (b) (2) are present in said solvent mixture in amounts of about 40 to 99%, preferably 50 to 85%, especially 60%, and about 1 to 60%, preferably about 15 to 50%, especially 40%, by volume, respectively.

7. A process according to claim 5 wherein (b) (2) is 1,1,2-trifluoro-1,2,2-trichloroethylene.

8. A process according to claim 5 wherein said contact time is about 2 sec. to 2 minutes.

9. A process according to claim 5 wherein said PVC body is a sheet moving at about 1-60 ft/min.

10. A process according to claim 5 wherein the stabilizing amount is about 0.3 to 1.8 $g/m^2$.